# EUROPÄISCHE PATENTSCHRIFT

(11) **EP 3 359 874 B1**
(45) Veröffentlichungstag und Bekanntmachung des Hinweises auf die Patenterteilung: **09.12.2020**
(21) Anmeldenummer: 16778064.2
(22) Anmeldetag: 07.10.2016
(51) Int. Cl.: F21V 8/00

(54) **ANORDNUNG ZUR LICHTABGABE**
ARRANGEMENT FOR EMITTING LIGHT
DISPOSITIF D'ÉMISSION DE LUMIÈRE

(30) Priorität: 09.10.2015 DE 102015219600; 27.04.2016 DE 102016207137
(43) Veröffentlichungstag der Anmeldung: 15.08.2018
(73) Patentinhaber: Zumtobel Lighting GmbH, 6850 Dornbirn (AT)
(72) Erfinder: NIEDERSTÄTTER, Andreas, 6020 Innsbruck (AT); FRICK, Joachim, 6833 Klaus (AT); CERV, Simon, 6850 Dornbirn (AT); REIN, Thomas, 6850 Dornbirn (AT); SCHWAIGHOFER, Andreas, 6850 Dornbirn (AT)
(74) Vertreter: Thun, Clemens
(86) Internationale Anmeldenummer: PCT/EP2016/074083
(87) Internationale Veröffentlichungsnummer: WO 2017/060479

(56) Entgegenhaltungen:
- EP-A2- 2 184 628
- DE-A-102012 215 640
- DE-A1-102014 200 369
- JP-A- 2004 227 835
- KR-A- 20120 017 230
- US-A- 5 396 350
- US-A1- 2005 185 416
- US-A1- 2015 146 132

## Beschreibung

Die vorliegende Erfindung betrifft eine Anordnung zur Lichtabgabe, welche eine flächige Anordnung von Linsen aufweist sowie Lichtquellen in Form von LEDs, deren Licht über die Linsen abgegeben wird.

Der Einsatz von linsenartigen optischen Elementen zur Beeinflussung der Lichtabgabe einer Leuchte ist aus dem Stand der Technik bereits hinlänglich bekannt. Da durch entsprechende Formgebung der Linsen sehr gut Einfluss auf die Verteilung des abgegebenen Lichts genommen werden kann, bieten derartige optische Elemente die Möglichkeit, die Lichtabgabe gezielt in gewünschter Weise anzupassen. Dieser Vorteil kommt insbesondere bei der Verwendung von LEDs als Lichtquellen zum Tragen, da LEDs zunächst Licht in einen sehr breiten Winkelbereich abgeben und dementsprechend eine gezielte Bündelung und Ausrichtung des abgegebenen Lichts unerlässlich ist, um beispielsweise die Anforderungen einer effizienten Beleuchtung eines Arbeitsplatzes oder dergleichen erfüllen zu können.

Es hat sich dabei in der Vergangenheit eine Ausführungsform als bevorzugt herausgestellt, bei der eine Vielzahl von Linsen zum Einsatz kommt und jeder Linse eine LED individuell zugeordnet ist. Die Linse beeinflusst dann gezielt das Licht der ihr zugeordneten LED. Da in diesem Fall die Linse in definierter Weise bezüglich der LED positioniert wird, kann sichergestellt werden, dass das Licht tatsächlich innerhalb eines gewünschten Winkelbereichs mit der gewünschten Lichtverteilung abgegeben wird. Sowohl die Linsen als auch die LEDs sind dann in der Regel matrixartig angeordnet, wobei die Linsen oftmals zu einem einstückigen optischen Element zusammengefasst sind. Aber auch andere Ausführungsformen gehören zum derzeitigen Stand der Technik.

So beschreibt DE 10 2014 200 369 A1 eine sogenannte Flächenleuchtvorrichtung, bei der (LED-)Licht seitlich in einen flächigen Lichtleiter eingekoppelt und über diesen verteilt wird. Die Lichtabgabe in eine Abstrahlrichtung senkrecht zur Lichtleiterplatte erfolgt dann mit Hilfe sogenannter Mikrolinsen, die z. B. Bestandteil einer weiteren Platte sind. Die Lichteintrittsbereiche dieser Linsen sind dabei der Lichtleiterplatte zur Lichtverteilung zugewandt, wobei ein transparenter Haftvermittler vorgesehen ist, welcher einen Eintritt des auszukoppelnden Lichtes von der Lichtleiterplatter in die Linsen ermöglicht.

JP 2004 227835 A offenbart eine Beleuchtungseinrichtung, in der eine optische Folie (hochtransparente optische Platte) auf einer transparenten Lichtleiterplatte aufgebracht ist. Die Folie (Platte) weist auf der einen, der Lichtleiterplatte zugewandten Seite eine Mehrzahl von Mikroprismen auf, mit quadratischem Kegelprofil, auf der anderen Seite eine Mehrzahl von Mikrolinsen, die mit oder ohne Zwischenräume(n) angeordnet sind. Das Licht wird seitlich, also stirnseitig, in die Lichtleiterplatte eingekoppelt. Die optische Platte weist Lichtauskoppelstrukturen (Mikroprismen) auf, die ausschließlich auf dem Rand der Linse angeordnet sind.

US 5 396 350 A offenbart eine Hintergrundbeleuchtungseinrichtung für eine Flachbildschirmanzeige, bestehend aus einer Lichterzeugungseinrichtung sowie einer transparenten Reflexionseinrichtung, wiederum bestehend aus einer ersten Haftvermittlerschicht, einem Substrat, einer zweiten Haftvermittlerschicht und einem asymmetrischen Reflexionsmittel bei einseitiger Lichteinkopplung bzw.
einem symmetrischen Reflexionsmittel bei beidseitiger bzw. vierseitiger Lichteinkopplung in Form von asymmetrischen oder symmetrischen Mikroprismen optional in Kombination mit einer Anordnung von Mikrolinsen. Die Dicke einer dazwischen befindlichen Substratschicht ist so optimiert, dass die Divergenz des an den Mikroprismen divergent reflektierten Lichtes durch die Mikrolinsen geeigneter Brennweite kompensiert wird.

US 2015/146132 A1 beschreibt eine planare Lichtquellenvorrichtung, mit der flächiges Licht mit Richtwirkung (z. B. zur Hintergrundbeleuchtung) erhalten werden kann. Unter den insgesamt 10 beschriebenen Ausführungsformen offenbart ein eine davon ein plattenförmiges Hohlraumgehäuse, in welches Licht mehrerer Lichtquellen seitlich eingekoppelt, gemischt und gleichverteilt wird. Licht welches eine der in der oberen Platte befindlichen Öffnungen erreicht und das Gehäuse in der Regel divergent verläßt, wird durch unmittelbar über den Öffnungen angeordnete Linsen kollimiert, wodurch es dann im Wesentlichen parallel zur optischen Achse der Linse emittiert wird.

EP 2 184 628 A2 beschreibt eine Leuchte, z. B. zur Ausleuchtung von Fluchtwegen oder Arbeitsplätzen mit besonderer Gefährdung, in Form einer Kombination aus Lichtquelle (optische Platte) und Piktogramm (Streuscheibe). Die Leuchte besteht also aus einer flachen durchscheinenden Lichtleitplatte, welche auf zumindest einer seitlichen Oberfläche eine Lichtverteilstruktur aufweist, gebildet aus einer Vielzahl von Mikrostrukturen (Mikrolinsen), welche eine gleichmäßige Ausleuchtung der Streuscheibe bewirkt. Das Licht der Lichtleiterplatte wird nahezu ungerichtet der Streuscheibe zugeführt und ebenfalls mittels Mikrostrukturen (in diesem Falle vorteilhafterweise in Form von Prismen) zur Beleuchtung nach außen gestreut. Die Streuscheibe dient insbesondere der Formgebung, der Kontrolle und Verteilung des Lichtes in einem bestimmten Winkelbereich.

DE 10 2012 215 640 A1 beschreibt eine Lichtleitereinheit für ein Beleuchtungssystem, mit einer Lichtleiterplatte und einer Entblendungseinheit, wobei Lichtquellen seitlich zur Lichtleiterplatte angeordnet sind, sodass seitlich Licht in die Lichtleiterplatte eingekoppelt wird. Die Lichtleiterplatte weist Strukturen zum Auskoppeln von Licht aus der Lichtleiterplatte auf, wobei die Entblendungseinheit mit kollimierende Elemente ausgebildet ist, welche jeweils einer Struktur der Lichtleiterplatte zugeordnet sind. Die Strukturen der Lichtleiterplatte sind hierbei in einer Ausbuchtung des jeweils zugeordneten kollimierenden Elements angeordnet, wobei das kollimierende Element in seinen Abmessungen stets größer ist als die Struktur.

Die oben beschriebenen Ausführungsformen haben sich wie bereits erwähnt vielfach bewährt, es hat sich allerdings gezeigt, dass dennoch gewisse Nachteile hinsichtlich der Lichtabgabe auftreten können. So führt eine individuelle Zuordnung der LEDs zu den Linsen dazu, dass nach wie vor die LEDs als einzelne Lichtquellen erkennbar sind, was in der Regel nicht gewünscht wird. Weiterhin stellen LEDs im Wesentlichen punktförmige Lichtquellen dar, die zu lokal sehr hohen Leuchtstärken führen können. Mit Hilfe der Linsen kann zwar insgesamt die Lichtabgabe auf einen gewünschten Bereich eingeschränkt werden, trotz allem können in diesem Fall dann sehr hohe lokale Leuchtstärken für die Lichtabgabe entstehen, die ebenfalls vermieden werden sollen.

Der vorliegenden Erfindung liegt deshalb die Aufgabenstellung zugrunde, bei einer Anordnung zur Lichtabgabe, bei der mehrere Linsen sowie LEDs zum Einsatz kommen, die oben beschriebenen Nachteile zu vermeiden.

Die Aufgabe wird durch eine Anordnung zur Lichtabgabe, welche die Merkmale des Anspruchs 1 aufweist, gelöst. Vorteilhafte Weiterbildungen der Erfindungen sind Gegenstand der abhängigen Ansprüche.

Die erfindungsgemäße Lösung beruht auf dem Gedanken, von dem Konzept der individuellen Zuordnung einer einzelnen LED zu einer Linse abzuweichen und stattdessen mit Hilfe von Lichtverteilungsmitteln das von mehreren LEDs emittierte Licht zunächst zu verteilen bzw. zu vermischen und anschließend in die jeweiligen Lichteintrittsbereiche der Linsen einzukoppeln. Die Lichtverteilungsmittel dienen in diesem Fall also dazu, den Linsen jeweils individuell zugeordnete virtuelle Lichtquellen zu realisieren, deren Licht dann in gewünschter Weise durch die Linsen beeinflusst wird. Dies führt nicht nur dazu, dass das Auftreten lokaler hoher Leuchtstärken vermieden wird, sondern eröffnet - wie nachfolgend noch näher erläutert - auch die Möglichkeit, das Erscheinungsbild der einzelnen virtuellen Lichtquellen zu variieren.

Gemäß der vorliegenden Erfindung ist hierbei vorgesehen, dass die erfindungsgemäße Anordnung zur Lichtabgabe eine flächige Anordnung von Linsen aufweist, welche wiederum jeweils einen Lichteintrittsbereich sowie einen Lichtaustrittsbereich aufweisen. Weiterhin enthält die Anordnung Lichtquellen in Form von LEDs, deren Licht über die Linsen abgegeben wird, sowie den Lichteintrittsbereichen der Linsen zugewandte Lichtverteilungsmittel, welche das von den LEDs emittierte Licht verteilen und in die Lichteintrittsbereiche der Linsen einkoppeln.

Die erfindungsgemäße Anordnung ist dadurch gekennzeichnet, dass die Lichtleiterplatte im Bereich der Lichteintrittsbereiche der Linsen an ihrer Oberfläche Lichtauskoppelstrukturen aufweist, welche auftreffende Lichtstrahlen derart umlenken, dass diese die Lichtleiterplatte verlassen können und in die Linsenkörper eintreten, wobei die Lichtauskoppelstrukturen hinsichtlich ihrer Abmessungen im Wesentlichen den Abmessungen der Lichteintrittsbereiche der Linsen entsprechen. Zudem sind die Lichtauskoppelstrukturen als Aufrauhungen oder Streustrukturen ausgeführt.

In bekannter Weise können hierbei die LEDs auf einer oder mehreren Platinen angeordnet sein, die dann im Randbereich der Lichtleiterplatte angeordnet sind. Durch Mehrfachreflexionen innerhalb der Lichtleiterplatte wird dann das Licht der LEDs in entsprechender Weise verteilt. Ein Vorteil dieser Vorgehensweise besteht dabei auch darin, dass das Licht der LEDs, bevor es über die Linsen abgegeben wird, zunächst innerhalb der Lichtleiterplatte vermischt wird und dementsprechend geringfügige Abweichungen in der spektralen Zusammensetzung des von den LEDs abgegebenen Lichts ausgeglichen werden können. Insgesamt wird hierdurch also eine homogenere Lichtabgabe hinsichtlich der Farbe bzw. Farbtemperatur erzielt.

Da in der Regel die LEDs deutlich kleiner sind als der entsprechend zugeordnete Lichteintrittsbereich der Linse besteht also die Möglichkeit, die Abmessung einer virtuellen Lichtquelle exakt an die Abmessung des Lichteintrittsbereichs der zugehörigen Linse anzupassen. Hierdurch wird nicht nur das Auftreten der unerwünschten lokalen hohen Leuchtstärken vermieden sondern die Oberflächenstruktur der Lichtauskoppelstrukturen kann in gezielter Weise beeinflusst werden, um die Lichtabstrahlcharakteristik der erfindungsgemäßen Anordnung weiter zu beeinflussen. Denkbar wäre beispielsweise, Lichtauskoppelstrukturen gezielt durch rillen- oder rasterartige Mikrostrukturen zu realisieren, die einerseits die Lichtauskopplung aus der Lichtleiterplatte ermöglichen, andererseits jedoch bewirken, dass das durch die Linsen abgegebene Licht eine gewisse Strukturierung aufweist.

Vorzugsweise ist ferner ein Gitter vorgesehen, dessen Öffnungen hinsichtlich ihrer Größe und Positionierung im Wesentlichen den Lichteintrittsbereichen der Linsen entsprechen. Durch diese zusätzliche Maßnahme kann dann verhindert werden, dass Licht abgegeben wird, welches nicht in der gewünschten Weise durch die Linsen beeinflusst wurde. Auch dieses Gitter ist vorzugsweise zur Lichtleiterplatte hin reflektierend ausgebildet, um den Effekt der Lichtdurchmischung zusätzlich zu verstärken.

Die Linsen selbst können in unterschiedlicher Weise ausgebildet sein, je nachdem in welcher Weise eine Lichtabgabe angestrebt wird. Als vorteilhaft hat sich hierbei insbesondere der Einsatz pyramidenstumpfartiger oder kegelstumpfartiger Linsen herausgestellt, die dann idealerweise matrixartig angeordnet sind. Vorzugsweise sind hierbei die Linsen einstückig zu einem optischen Element zusammengefasst, welches dann das Lichtabgabeelement der Anordnung bildet.

Letztendlich besteht also mit Hilfe der erfindungsgemäßen Lösung die Möglichkeit, die Lichtabgabe einer Anordnung der eingangs beschriebenen Weise nochmals weiter positiv zu beeinflussen.

Nachfolgend soll die Erfindung anhand der beiliegenden Zeichnungen näher erläutert werden. Es zeigen:
- Figur 1: die Schnittdarstellung einer Leuchte, bei der die erfindungsgemäße Anordnung zur flächigen Lichtabgabe zum Einsatz kommt;
- Figur 2: eine vergrößerte Darstellung des zentralen Bereichs der Leuchte gemäß Figur 1, der für die Lichtabgabe verantwortlich ist und eine erfindungsgemäße Anordnung zur flächigen Lichtabgabe aufweist; und
- Figur 3: ein nicht erfindungsgemässes Beispiel des zentralen Bereichs der Leuchte, bei dem die Lichtverteilungsmittel zum Bilden der virtuellen Lichtquellen mit Hilfe einer Lichtkammer realisiert werden.

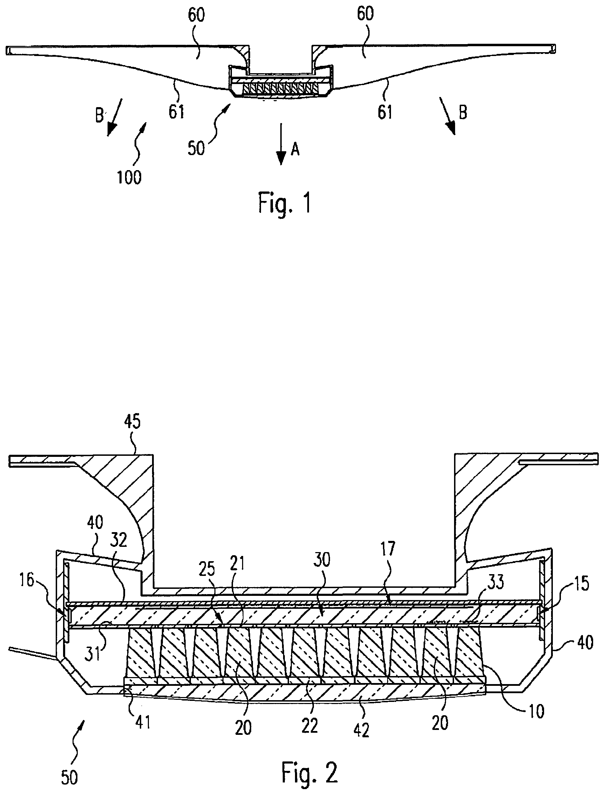

Figur 1 zeigt zunächst ein bevorzugtes Anwendungsbeispiel für die erfindungsgemäße Anordnung zur Lichtabgabe. Dargestellt ist eine allgemein mit dem Bezugszeichen 100 versehene Leuchte, welche eine Weiterentwicklung einer von der Anmelderin unter der Bezeichnung "Mildes Licht" vertriebenen Leuchte darstellt. Im vorliegenden Fall ist die Leuchte 100 als Deckenanbauleuchte ausgeführt, wobei es allerdings selbstverständlich auch ohne weiteres möglich wäre, die Leuchte 100 in vergleichbarer Weise als Deckeneinbauleuchte oder auch als Pendelleuchte zu realisieren. Auch kann das erfindungsgemäße Konzept durchaus bei anderen Leuchten zum Einsatz kommen, bei denen nicht - wie nachfolgend beschrieben - zu beiden Seiten des zentralen Bereichs eine zusätzliche Lichtabgabe erfolgt.

Bei der in Figur 1 dargestellten Leuchte 100 ist allerdings vorgesehen, dass diese Licht in zwei unterschiedlichen Weisen abgibt. So wird zunächst ein erster Anteil A des Lichts in einem zentralen mittleren Bereich der Leuchte 100 mit verhältnismäßig hoher Intensität abgegeben. Im vorliegenden Fall ist insbesondere eine gerichtete Lichtabgabe zur Unterseite hin vorgesehen, bei der also das Licht innerhalb eines vorgegebenen Winkelbereichs nach unten abgestrahlt wird, um beispielsweise einen Arbeitsplatz, eine Verkaufsfläche oder dergleichen konzentriert zu beleuchten. Für diese gerichtete Lichtabgabe ist die nachfolgend noch näher beschriebene so genannte zentrale "Light Engine" 50 der Leuchte 100 verantwortlich, welche die erfindungsgemäße Anordnung zur flächigen Lichtabgabe beinhaltet.

Zusätzlich ist allerdings bei der Leuchte 100 in Figur 1 auch vorgesehen, dass über zu beiden Seiten dieser Light Engine 50 angeordnete Bereiche jeweils ein zweiter Lichtanteil B abgegeben wird. Hierzu sind - von dem zu beleuchtenden Bereich aus gesehen - zu beiden Seiten der Light Engine 50 so genannte Lichtkammern 60 ausgebildet, deren Unterseiten jeweils durch flächige, lichtdurchlässige Lichtaustrittselemente 61 abgeschlossen sind. Über diese Lichtaustrittselemente 61 erfolgt die zweite Lichtabgabe B mit einer im Vergleich zur primären Lichtabgabe A deutlich geringeren Intensität, sodass also diese beiden seitlichen Bereiche lediglich leicht aufgehellt werden. Sinn dieser zusätzlichen zweiten Lichtabgabe B ist, dass für einen Beobachter auch unter flacheren Blickwinkeln erkennbar ist, ob die Leuchte 100 aktiviert ist bzw. Licht abgegeben wird. Es ergibt sich hierdurch ein deutlich angenehmeres Erscheinungsbild im Vergleich zu dem Fall, dass ausschließlich eine gerichtete Lichtabgabe über den zentralen Bereich der Light Engine 50 nach unten hin erfolgt, da dieser Bereich unter flachen Winkeln auch im aktivierten Zustand der Leuchte 100 eher dunkel erscheint. Dieses Konzept der zusätzlichen seitlichen Lichtabgabe ist beispielsweise in der DE 100 06 410 der Anmelderin ausführlich beschrieben.

Nachfolgend soll jedoch insbesondere die Ausgestaltung der Light Engine 50 näher erläutert werden, da diese wie bereits erwähnt die erfindungsgemäße Anordnung zur Lichtabgabe beinhaltet.

Die Ausgestaltung dieser Light Engine 50 kann dabei insbesondere näher der vergrößerten Schnittdarstellung von Figur 2 entnommen werden. Wie bereits eingangs erwähnt soll hierbei die Beeinflussung des insgesamt abgegebenen Lichts in erster Linie durch eine matrixartige Anordnung von pyramidenstumpfartigen Linsen 20 erfolgen, die an ihrem Lichtaustrittsbereich 22 im dargestellten Ausführungsbeispiel einstückig miteinander verbunden sind und hierdurch ein optisches Element 10 bilden. Das vorzugsweise aus einem klaren Kunststoffmaterial wie zum Beispiel PMMA oder PC gebildete optische Element 10 ist hierbei innerhalb eines profilartigen Trägerteils 40 angeordnet, welches Bestandteil eines Leuchtentragteils 45 ist bzw. mit diesem verbunden ist. Die untere Öffnung 41 des Trägerteils 40 wird durch eine transparente Abdeckscheibe 42 verschlossen, welche allerdings in erster Linie eine Schutzfunktion ausübt und die durch die Linsen 20 vorgenommene Lichtbeeinflussung nicht weiter bzw. zumindest nicht wesentlich beeinflussen soll.

Die einzelnen Linsen 20 sind wie bereits erwähnt etwa pyramidenstumpfartig ausgebildet, könnten allerdings in gleicher Weise auch kegelstumpfartig ausgeführt sein oder komplexere Strukturen aufweisen. Insbesondere sind sie jedoch derart ausgeführt, dass Licht, welches über die Oberseiten 21, die jeweils Lichteintrittsbereiche der Linsen 20 bilden, in den Linsenkörper eintritt, durch Brechung und/oder interne Totalreflexion an den Seitenflächen der Linsen 20 derart beeinflusst wird, dass es an der Unterseite innerhalb eines gewünschten Winkelbereichs abgegeben wird.

Derartige optische Elemente 10 mit matrixartig angeordneten Linsen 20 waren wie bereits erwähnt aus dem Stand der Technik bereits bekannt, allerdings war hier vorgesehen, jeder Linse 20 individuell eine einzelne LED als Lichtquelle zuzuordnen. Im vorliegenden Fall ist nunmehr erfindungsgemäß vorgesehen, diese individuelle Zuordnung aufzuheben und stattdessen mit Hilfe von Lichtverteilungsmitteln virtuelle Lichtquellen zu erzeugen, welche dann jeweils Licht in die zugehörigen Linsen 20 einstrahlen.

Diese virtuellen Lichtquellen werden bei dem Ausführungsbeispiel gemäß Figur 2 dadurch erzeugt, dass eine Lichtleiterplatte 30 zum Einsatz kommt, an deren Unterseite 31, also derjenigen Flachseite, die den Lichteintrittsbereichen 21 der Linsen 20 zugewandt ist, gezielt eine Lichtauskopplung derart erfolgt, dass Licht in die Linsen 20 eintritt. Als Lichtquellen der Anordnung kommen dann LEDs 15 zum Einsatz, die auf länglichen Platinen 16 angeordnet sind, die zu beiden Längsseiten der Lichtleiterplatte 30 positioniert sind, derart, dass die LEDs 15 unmittelbar über die Längsseiten der Lichtleiterplatte 30 Licht in diese einstrahlen. Mit Hilfe von Mehrfachreflexionen wird hierbei dann das Licht innerhalb der Lichtleiterplatte 30 verteilt und damit auch vermischt, wobei dieser Effekt insbesondere dadurch unterstützt werden kann, dass an der der Lichtaustrittsseite 31 der Lichtleiterplatte 30 gegenüberliegenden Rückseite 32 zusätzlich ein Reflektor 17 vorgesehen ist.

Die Lichtauskopplung aus der Lichtleiterplatte 30 in die Linsen 20 erfolgt dann dadurch, dass im Bereich der Lichteintrittsbereiche 21 der Linsen 20 Auskoppelstrukturen 33 (in Figur 2 sind hierzu lediglich einige der Auskoppelstrukturen 33 schematisch angedeutet) an der Oberfläche der Lichtleiterplatte 30 ausgebildet sind, welche auftreffende Lichtstrahlen derart umlenken, dass diese die Lichtleiterplatte 30 verlassen können und in die Linsenkörper 20 eintreten. Diese Auskoppelstrukturen 33 werden als Aufrauungen oder Streustrukturen ausgeführt. Allerdings wäre es auch denkbar, die entsprechenden Flächenbereiche in gezielter Weise regelmäßig zu strukturieren, um die Art der Lichtabgabe zusätzlich zu beeinflussen. Beispielsweise wäre die Verwendung spezieller Linien oder gitterartiger Strukturen denkbar, welche dann für eine spezielle Art und Weise der Lichtabgabe mit alternierenden Helligkeitsverläufen sorgen. Die Lichtabgabe wird in diesem Fall tatsächlich in erster Linie durch die Struktur der Auskoppelstruktur 33 vorgegeben, da die Linsen 20 hauptsächlich dazu dienen, das mit Hilfe der virtuellen Lichtquelle realisierte Lichtbündel dann auf einen bestimmten Bereich zu beschränken bzw. auf einen bestimmten Bereich zu richten. Wird hingegen eine klassische Aufrauung bzw. statistische Streustruktur verwendet, so wird ein im Wesentlichen homogenes Strahlenbündel erzielt, welches dann durch den pyramidenartigen Linsenkörper 20 auf einen bestimmten Winkelbereich eingeschränkt wird.

Die erfindungsgemäße Lösung gestattet also, durch die Formgebung der Auskoppelstrukturen 33 die Lichtabgabe der gesamten Anordnung zusätzlich zu beeinflussen, sofern dies gewünscht ist. In jedem Fall besteht allerdings die Möglichkeit, die flächenmäßige Größe der Auskoppelstrukturen 33 und damit die Größe der virtuellen Lichtquellen exakt an den Lichteintrittsbereich der jeweils zugehörigen Linse 20 anzupassen. Dies führt nicht nur zu einem verbesserten Erscheinungsbild sondern hat auch zur Folge, dass trotz geringerer maximaler Leuchtdichten aufgrund der größeren Fläche der virtuellen Lichtquellen mit Hilfe der gewünschten Anordnung insgesamt eine hohe Lichtmenge abgegeben werden kann und dementsprechend die Anordnung auch zur Ausleuchtung von Arbeitsplätzen oder anderen Bereichen, in denen hohe Helligkeiten erwünscht oder erforderlich sind, genutzt werden kann.

Eine weitere Maßnahme zur Verbesserung der Lichtabstrahleigenschaften besteht ferner darin, dass ein Gitter oder Raster 25 zum Einsatz kommt, welches an der Unterseite 31 der Lichtleiterplatte 30 anliegt und derart ausgeführt ist, dass die Gitteröffnungen hinsichtlich ihrer Abmessungen und Dimensionen den Lichteintrittsbereichen 21 der Linsen 20 entsprechen. Das Gitter, dessen der Lichtleiterplatte 30 zugewandte Seite vorzugsweise reflektierend ausgebildet ist, bewirkt dann, dass lediglich solches Licht die gesamte Anordnung verlassen kann, welches auch tatsächlich durch die Linsen 20 beeinflusst wurde. Auch diese Maßnahme trägt dementsprechend zu einer Verbesserung der Lichtabstrahleigenschaften bei.

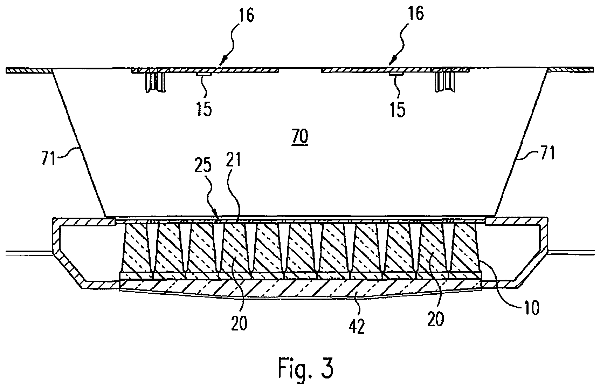

Eine, nicht erfindungsgemässe Möglichkeit zur Realisierung der virtuellen Lichtquellen ist in Figur 3 gezeigt. Hier sind Platinen 16 mit LEDs 15 beabstandet zu dem optischen Element 10 mit den Linsen 20 positioniert, wobei nunmehr der Zwischenraum zwischen den LED-Platinen 16 und der Linsenoptik 10 durch einen Hohlraum 70 überbrückt wird, der eine so genannte Mischkammer bildet. Von den LEDs 15, die im dargestellten Fall auf die Linsen 20 hin ausgerichtet sind, ggf. aber auch seitlich in der Mischkammer 70 angeordnet sein könnten, emittiertes Licht soll in dieser Mischkammer 70 also möglichst oft reflektiert werden, bevor es über die Lichteintrittsbereiche 21 in die Linsen 20 eintritt und dann zur Unterseite hin abgegeben wird. Dies wird dadurch unterstützt, dass die Mischkammer 70 möglichst vollständig von reflektierenden, insbesondere von diffus reflektierenden Wänden umschlossen wird. Im dargestellten Ausführungsbeispiel ist gezeigt, dass die Seitenwände 71 der Mischkammer 70 geneigt verlaufen, sodass sich insbesondere im Querschnitt ein trapezartiger Verlauf der Mischkammer 70 ergibt. Auch Stirnflächen und Rückwände der Mischkammer 70 sind vorzugsweise aus einem diffus reflektierenden Material ausgebildet bzw. weisen eine diffus reflektierende Beschichtung auf, wobei darüber hinaus gegebenenfalls auch die Platinen 16 selbst an ihren Oberflächen lichtstreuend ausgeführt sein können. All diese Maßnahmen sollen dazu führen, dass das von den LEDs 15 emittierte Licht zunächst ebenso wie bei der Lichtleiterplatte 30 gemäß Figur 2 aufgrund vielfacher Reflexionen durchmischt wird, bevor es dann jeweils über die Lichteintrittsflächen 21 in die Linsen 20 eintritt.

Auch in diesem Fall ist wiederum im Bereich der Lichteintrittsflächen 21 der Linsen 20 das bereits anhand von Figur 2 erläuterte Gitter 25 vorgesehen, welches verhindert, dass in die Zwischenräume zwischen zwei benachbarten Linsen 20 eintretendes Licht die Anordnung verlassen kann. Hier ist von besonderem Vorteil, wenn die der Mischkammer 70 zugewandte Oberfläche des Gitters 25 reflektierend, insbesondere diffus reflektieren ausgeführt ist, um den Effekt der Lichtdurchmischung zusätzlich zu unterstützen.

Auch bei dieser Vorgehensweise werden dann durch das Zusammenwirken von Mischkammer 70 und Gitter 25 virtuelle Lichtquellen realisiert, die dann jeweils Licht in die entsprechende Linse 20 einkoppeln. Der Aufwand zur Realisierung dieser virtuellen Lichtquellen ist im Vergleich zur Nutzung der Lichtleiterplatte etwas geringer, allerdings ist der Platzbedarf etwas größer und es bestehen bei dieser zweiten Ausführungsform dann weniger Möglichkeiten, die Art und Weise der Lichtabgabe der virtuellen Lichtquellen zusätzlich zu beeinflussen. So besteht insbesondere nun nicht die im Zusammenhang mit Figur 2 erwähnte Möglichkeit, die Lichtauskoppelstrukturen der Lichtleiterplatte in bestimmter Weise zu strukturieren, um hierbei gezielt zusätzlich Einfluss auf die Lichtabgabe zu nehmen.

Letztendlich wird das Auftreten punktueller hoher Leuchtstärken vermieden. Die Lichtabgabe wird hierdurch nicht nur insgesamt verbessert, sondern es können auch eventuelle Unterschiede in den spektralen Zusammensetzungen des von den LEDs abgegebenen Lichts ausgeglichen werden.

## Patentansprüche

1. Anordnung zur Lichtabgabe, aufweisend:
• eine flächige Anordnung von Linsen (20), welche jeweils einen Lichteintrittsbereich (21) sowie einen Lichtaustrittsbereich (22) aufweisen,
• Lichtquellen in Form von LEDs (15), deren Licht über die Linsen (20) abgegeben wird, sowie
• den Lichteintrittsbereichen (21) den Linsen (20) zugewandte Lichtverteilungsmittel, welche das von den LEDs (15) emittierte Licht verteilen und in die Lichteintrittsbereiche (21) der Linsen (20) einkoppeln,
wobei die Lichtverteilungsmittel eine Lichtleiterplatte (30) umfassen, welche dazu ausgebildet ist, in die Lichtleiterplatte (30) eingekoppeltes Licht zu verteilen und über eine den Linsen (20) zugewandte Flachseite (31) abzugeben,
wobei die Lichtleiterplatte (30) im Bereich der Lichteintrittsbereiche (21) der Linsen (20) an ihrer Oberfläche (31) Lichtauskoppelstrukturen (33) aufweist, welche auftreffende Lichtstrahlen derart umlenken, dass diese die Lichtleiterplatte (30) verlassen können und in die Linsenkörper (20) eintreten,
wobei die Lichtauskoppelstrukturen (33) hinsichtlich ihrer Abmessungen im Wesentlichen den Abmessungen der Lichteintrittsbereiche (21) der Linsen (20) entsprechen, **dadurch gekennzeichnet, dass** die Lichtauskoppelstrukturen (33) als Aufrauhungen oder Streustrukturen ausgeführt sind.

2. Anordnung zur Lichtabgabe nach Anspruch 1,
**dadurch gekennzeichnet,**
**dass** die LEDs (15) auf einer oder mehreren Platinen (16) angeordnet sind, welche im Randbereich der Lichtleiterplatte (30) angeordnet sind.

3. Anordnung zur Lichtabgabe nach Anspruch 1 oder 2,
**dadurch gekennzeichnet,**
**dass** die LEDs (15) an zumindest einem Randbereich der Lichtleiterplatte (30), vorzugsweise an zwei einander gegenüberliegenden Randbereichen der Lichtleiterplatte (30) angeordnet sind.

4. Anordnung nach einem der Ansprüche 1 bis 3,
**dadurch gekennzeichnet,**
**dass** die Lichtauskoppelstrukturen (33) eine regelmäßige Struktur, insbesondere eine Gitterstruktur oder eine Rillenstruktur aufweisen.

5. Anordnung zur Lichtabgabe nach einem der vorherigen Ansprüche,
**dadurch gekennzeichnet,**
**dass** diese ferner ein Gitter (25) aufweist, dessen Öffnungen hinsichtlich ihrer Größe und Positionierung im Wesentlichen den Lichteintrittsbereichen (21) der Linsen (20) entsprechen.

6. Anordnung zur Lichtabgabe nach einem der vorherigen Ansprüche,
**dadurch gekennzeichnet,**
**dass** die Linsen (20) pyramidenstumpfartig oder kegelstumpfartig ausgebildet sind.

7. Anordnung zur Lichtabgabe nach einem der vorherigen Ansprüche,
**dadurch gekennzeichnet,**
**dass** die Linsen (20) matrixartig angeordnet sind.

8. Anordnung zur Lichtabgabe nach Anspruch 7,
**dadurch gekennzeichnet,**
**dass** die Linsen (20) einstückig zu einem optischen Element (10) zusammengefasst sind.

9. Leuchte mit einer Anordnung zur Lichtabgabe nach einem der vorherigen Ansprüche.

## Claims

1. Arrangement for emitting light, comprising:
• a planar arrangement of lenses (20), each of which comprises a light entry region (21) and a light exit region (22),
• light sources in the form of LEDs (15), the light of which is emitted via the lenses (20), and
• light distribution means (20), which face the light entry regions of the lenses (21) and which distribute the light emitted by the LEDs (15) and couple said light into the light entry regions (21) of the lenses (20),
wherein the light distribution means comprise a light guide plate (30), which is configured to distribute light coupled into the light guide plate (30) and to emit said light via a flat side (31) facing the lenses (20),
wherein,
on its surface (31), in the region of the light entry regions (21) of the lenses (20), the light guide plate (30) comprises light outcoupling structures (33), which deflect incident light beams in such a way that said light beams can leave the light guide plate (30) and enter the lens body (20),
wherein, in terms of their dimensions, the light outcoupling structures (33) substantially correspond to the dimensions of the light entry regions (21) of the lenses (20), **characterized in that** the light outcoupling structures (33) are configured as roughenings or scattering structures.

2. Arrangement for emitting light according to Claim 1,
**characterized in that**
the LEDs (15) are disposed on one or more circuit boards (16), which are disposed in the edge region of the light guide plate (30).

3. Arrangement for emitting light according to Claim 1 or 2,
**characterized in that**
the LEDs (15) are disposed on at least one edge region of the light guide plate (30), preferably on two opposite edge regions of the light guide plate (30).

4. Arrangement according to any one of Claims 1 to 3,
**characterized in that**
the light outcoupling structures (33) have a regular structure, in particular a lattice structure or a groove structure.

5. Arrangement for emitting light according to any one of the preceding claims,
**characterized in that**
said arrangement further comprises a lattice (25), the openings of which substantially correspond to the light entry regions (21) of the lenses (20) in terms of their size and positioning.

6. Arrangement for emitting light according to any one of the preceding claims,
**characterized in that**
the lenses (20) are truncated pyramid-shaped or frustoconical.

7. Arrangement for emitting light according to any one of the preceding claims,
**characterized in that**
the lenses (20) are arranged in a matrix-like manner.

8. Arrangement for emitting light according to Claim 7,
**characterized in that**
the lenses (20) are integrally combined to form one optical element (10).

9. Lamp having an arrangement for emitting light according to any one of the preceding claims.

## Revendications

1. Ensemble d'émission de lumière, ayant :
• un ensemble plat de lentilles (20), lesquelles présentent respectivement une zone d'entrée de lumière (21) ainsi qu'une zone de sortie de lumière (22),
• des sources lumineuses sous forme de DEL (15), dont la lumière est émise à travers les lentilles (20), ainsi que
• des moyens de distribution de lumière faisant face aux zones d'entrée de lumière (21) des lentilles (20), lesquels distribuent la lumière émise par les DEL (15) et la couplent dans la zone d'entrée de lumière (21) des lentilles (20),
les moyens de distribution de lumière comprenant une plaque à guide d'ondes optiques (30), laquelle est formée pour distribuer de la lumière couplée dans la plaque à guide d'ondes optiques (30) et l'émettre à travers un côté plat (31) faisant face aux lentilles (20),
la plaque à guide d'ondes optiques (30) présentant dans la zone des zones d'entrée de lumière (21) des lentilles (20) des structures de découplage de lumière (33) sur sa surface (31), lesquelles devient les faisceaux de lumière incidents de telle façon que ceux-ci peuvent quitter la plaque à guide d'ondes optiques (30) et entrer dans les corps des lentilles (20),
les structures de découplage de lumière (33) correspondant, en ce qui concerne leurs dimensions, essentiellement aux dimensions des zones d'entrée de lumière (21) des lentilles (20), **caractérisé en ce que** les structures de découplage de lumière (33) sont réalisées en tant que rugosités ou de structures de dispersion.

2. Ensemble d'émission de lumière selon la revendication 1,
**caractérisé en ce**
**que** les DEL (15) sont disposées sur une ou plusieurs cartes de circuit imprimé (16), lesquelles sont disposées dans la zone de bord de la plaque à guide d'ondes optiques (30).

3. Ensemble d'émission de lumière selon la revendication 1 ou 2,
**caractérisé en ce**
**que** les DEL (15) sont disposées sur au moins une zone de bord de la plaque à guide d'ondes optiques (30), de préférence sur deux zones de bord opposées l'une à l'autre de la plaque à guide d'ondes optiques (30).

4. Ensemble selon l'une quelconque des revendications 1 à 3,
**caractérisé en ce**
**que** les structures de découplage de lumière (33) présentent une structure régulière, en particulier un structure réticulaire ou une structure rainurée.

5. Ensemble d'émission de lumière selon l'une quelconque des revendications précédentes,
**caractérisé en ce**
**que** celui-ci présente en outre une grille (25), dont les ouvertures correspondent, en ce qui concerne leur taille et positionnement, essentiellement aux zones d'entrée de lumière (21) des lentilles (20).

6. Ensemble d'émission de lumière selon l'une quelconque des revendications précédentes,
**caractérisé en ce**
**que** les lentilles (20) sont formées en forme de pyramide tronquée ou en forme de cône tronqué.

7. Ensemble d'émission de lumière selon l'une quelconque des revendications précédentes,
**caractérisé en ce**
**que** les lentilles (20) sont disposées en forme de matrice.

8. Ensemble d'émission de lumière selon la revendication 7,
**caractérisé en ce**
**que** les lentilles (20) sont groupées de façon intégrée en un élément optique (10).

9. Luminaire comprenant un ensemble d'émission de lumière selon l'une quelconque des revendications précédentes.
